# EUROPÄISCHE PATENTSCHRIFT

(11) **EP 1 113 896 B1**
(45) Veröffentlichungstag und Bekanntmachung des Hinweises auf die Patenterteilung: **06.03.2002**
(21) Anmeldenummer: 99944604.0
(22) Anmeldetag: 04.09.1999
(51) Int. Cl.: B23C 3/12

(54) **VORRICHTUNG ZUM BEARBEITEN EINES GEGENSTANDES, INSBESONDERE HOHLKEHLFRÄSMASCHINE**
DEVICE FOR MACHINING AN OBJECT, ESPECIALLY A CIRCULAR GROOVE MILLING MACHINE
DISPOSITIF POUR USINER UN OBJET, EN PARTICULIER MACHINE A FRAISER DES GORGES

(30) Priorität: 19.09.1998 DE 19843072
(43) Veröffentlichungstag der Anmeldung: 11.07.2001
(73) Patentinhaber: TTS Tooltechnic Systems AG & Co. KG, 73240 Wendlingen (DE)
(72) Erfinder: REINES, Wolfgang, D-72664 Kohlberg (DE)
(74) Vertreter: Reimold, Otto, Dipl.-Phys.Dr.
(86) Internationale Anmeldenummer: EP9906521
(87) Internationale Veröffentlichungsnummer: WO0016939

(56) Entgegenhaltungen:
- DE-U- 9 410 310
- FR-A- 2 620 062

## Beschreibung

Die Erfindung betrifft eine Vorrichtung zum Bearbeiten eines Gegenstandes mit einem antreibbaren, insbesondere motorbetriebenen Bearbeitungsgerät gemäß dem Oberbegriff des Anspruchs 1.

Eine solche Vorrichtung wird in der DE 94 17 415 U1 offenbart. Dabei sind die Mittel zum Anlegen der Vorrichtung an den Gegenstand als Grundplatte ausgeführt, die einen Support aufweist, an welchem ein zur Grundplatte in einem spitzen Winkel geneigtes Mittel zum Aufnehmen des Bearbeitungsgeräts in Form eines Schlittens geführt ist, welcher in wenigstens zwei unterschiedlichen Stellungen des eine schiefe Ebene zur Grundplatte bildenden Supports einstellbar und/oder verriegelbar ist. Dadurch kann das Bearbeitungsgerät aus einer Ruheposition mit wenigen Handgriffen in eine Arbeitsposition überführt werden.

Die DE 37 16 057 A1 zeigt eine Führungsvorrichtung für Elektrowerkzeuge, bei der eine die Bearbeitungsbahn vorgebende Führungsschiene an dem zu bearbeitenden Gegenstand festlegbar ist, und auf die Führungsschiene ein das Elektrowerkzeug tragender Schlitten aufsetzbar ist und entlang der Führungsschiene zum Bearbeiten des Gegenstandes bewegbar ist.

Bei den bekannten Vorrichtungen ist insbesondere das Anfahren des zu bearbeitenden Gegenstandes bzw. das Eintauchen des Bearbeitungsgerätes in den Gegenstand am Anfang der Bearbeitungsbahn problematisch und wird unter Verwendung von Hilfskonstruktionen vorgenommen, wie beispielsweise unterlegte Verlängerungen des zu bearbeitenden Gegenstandes oder eine freihändige Führung der Vorrichtung. Dies erfordert eine sorgfältige und aufwendige Handhabung und hat dennoch eine herabgesetzte Genauigkeit bzw. Maßhaltigkeit der bearbeiteten Flächen und Bahnen zur Folge.

Der vorliegenden Erfindung liegt daher das Problem zugrunde, eine Vorrichtung zum Bearbeiten eines Gegenstandes entlang einer Bearbeitungsbahn, insbesondere eine Hohlkehlfräsmaschine, bereitzustellen, welche die Nachteile des Standes der Technik überwindet. Insbesondere soll die Vorrichtung einfach zu handhaben ist und dennoch eine hohe Genauigkeit und Maßhaltigkeit der bearbeiteten Flächen und Bahnen gewährleisten. Darüber hinaus soll die Vorrichtung klein, leicht und kostengünstig herstellbar sein.

Das Problem wird durch die im Anspruch 1 offenbarte Vorrichtung gelöst. Besondere Ausführungsarten der Erfindung sind in den Unteransprüchen offenbart.

Die erfindungsgemäße Vorrichtung nach Anspruch 1 eignet sich beispielsweise zum rationellen Herstellen von Hohlkehlen in Wischleisten von Arbeitsplatten, Spül- oder Labortischen. Ebenso können Nuten oder sonstige Vertiefungen in den zu bearbeitenden Gegenstand eingebracht werden durch beispielsweise ein das antreibbare, insbesondere motorbetriebene Bearbeitungsgerät repräsentierendes Fräsgerät mit einem Fräser. Die herzustellende Nut bzw. Wischleiste definiert dabei die Bearbeitungsbahn, entlang derer die Vorrichtung bewegt wird.

Erfindungsgemäß ist das Bearbeitungsgerät gegenüber den Mitteln zum Anlegen beim Bearbeiten ebenfalls parallel zur Bearbeitungsbahn bewegbar. Die Richtung zur Bewegung des Bearbeitungsgerätes gegenüber den Mitteln zum Anlegen ist dabei in der Regel parallel zu einer Oberfläche des zu bearbeitenden Gegenstandes.

Die Bewegbarkeit des Bearbeitungsgerätes gegenüber dem Mittel zum Anlegen bietet den Vorteil, daß die Vorrichtung an dem zu bearbeitenden Gegenstand angelegt werden kann, ohne daß das motorbetriebene Bearbeitungsgerät in Eingriff mit dem zu bearbeitenden Gegenstand kommt.

Anschließend kann entweder zunächst die Vorrichtung parallel zur Bearbeitungsbahn bewegt werden und gegen Ende des Bearbeitungsvorganges das Bearbeitungsgerät gegenüber den Mitteln zum Anlegen bis zur Endposition der Bearbeitungsbahn bewegt werden oder zunächst das Bearbeitungsgerät gegenüber den Mitteln zum Anlegen bewegt und dabei in Eingriff mit dem zu bearbeitenden Gegenstand gebracht werden und anschließend die gesamte Vorrichtung entlang der Bearbeitungsbahn bis zu einer Endposition der Bearbeitungsbahn bewegt werden.

In der Regel handelt es sich bei der Bewegung des Bearbeitungsgerätes gegenüber den Mitteln zum Anlegen um eine Linearbewegung parallel zur Bearbeitungsbahn, wobei die Endposition dieser Linearbewegung so gewählt ist, daß das Bearbeitungsgerät bündig mit dem in Bearbeitungsrichtung vorderen Ende der Mittel zum Anlegen der Vorrichtung abschließt. Für das motorbetriebene Bearbeitungsgerät kommen neben einem Fräser beispielsweise auch ein Bohrer, eine Säge oder ein sonstiges spanabhebendes oder spanlos arbeitendes Bearbeitungsgerät in Betracht.

Die besondere Ausführungsart der Erfindung gemäß Anspruch 2 bietet den Vorteil, daß durch die Mittel zum Aufnehmen des Bearbeitungsgerätes dieses lösbar und wechselbar an der Vorrichtung festlegbar ist.
Die Festlegung erfolgt vorzugsweise mittels eines Klemmverschlusses. Die Längsachse des Bearbeitungsgerätes schließt in der Regel mit der Bearbeitungsbahn einen spitzen Winkel ein. Vorzugsweise ist das Bearbeitungsgerät in den Mitteln zum Aufnehmen stufenlos in verschiedenen Positionen festlegbar, um insbesondere eine Einstellung für verschiedene Bearbeitungsgeräte, z. B. Fräser mit unterschiedlicher Länge, zu ermöglichen.

Die besondere Ausführungsart der Erfindung gemäß Anspruch 3 hat den Vorteil, daß durch die Führung eine präzise Bewegung des Bearbeitungsgerätes gegenüber den Mitteln zum Anlegen gewährleistet ist. Vorzugsweise ist die Führung als eine sogenannte Schwalbenschwanzführung ausgeführt. Jedoch kommen auch beliebige andere geeignete Führungen in Betracht, beispielsweise eine Rechteckführung oder mittels an einer Stange geführte Buchsen. Die Führung ist dabei wiederum parallel zur Bearbeitungsbahn ausgerichtet, in der Regel parallel zu mindestens einer der Oberflächen des zu bearbeitenden Gegenstandes. Besonders vorteilhaft ist dabei die Verwendung von ein- bzw. nachstellbaren Führungen, beispielsweise die Verwendung von einstellbaren Schwalbenschwanzführungsleisten oder Einstellkeilen, die ein präzises Ein- bzw. Nachstellen der exakten Position und Winkelausrichtung des Bearbeitungsgerätes und insbesondere des Bearbeitungswerkzeugs in Bezug auf die zu bearbeitenden Flächen ermöglichen. Beispielsweise wird dadurch bei einer Hohlkehlfräsmaschine die exakte Ausrichtung des Fräsers auf die Winkelhalbierende des von den zu bearbeitenden Flächen eingeschlossenen Winkels ermöglicht.

Die besondere Ausführungsart der Erfindung gemäß Anspruch 4 hat den Vorteil, daß durch den Anschlag für die Bewegung des Bearbeitungsgerätes die Bearbeitung des Gegenstandes besonders präzise und dennoch einfach erfolgt, insbesondere wenn der Anschlag einstellbar ist gemäß der besonderen Ausführungsart nach Anspruch 5.

Die besondere Ausführungsart der Erfindung gemäß Anspruch 6 hat den Vorteil, daß durch die Schenkel eine besonders präzise Führung der Vorrichtung gewährleistet ist. Die Schenkel können dabei einen Winkel einschließen, der in der Oberfläche einer Ebene des zu bearbeitenden Gegenstandes liegt, oder einen Winkel von in der Regel 90° einschließen, der durch zwei aufeinander senkrecht stehende Oberflächen des zu bearbeitenden Gegenstandes gebildet ist, beispielsweise für das Herstellen einer Hohlkehle in einer Wischleiste.

Die besondere Ausführungsart der Erfindung gemäß Anspruch 7 hat den Vorteil, daß durch die Verschwenkbarkeit Gegenstände mit nahezu beliebiger Winkelgeometrie bearbeitet werden können, insbesondere können Hohlkehlen für Wischleisten auch dann präzise hergestellt werden, wenn die die Hohlkehle definierenden Oberflächen des zu bearbeitenden Gegenstandes keinen rechten Winkel einschließen. Die Schenkel sind in jeder einstellbaren Winkellage feststellbar, beispielsweise klemmbar.

Die besondere Ausführungsart der Erfindung gemäß Anspruch 8 hat den Vorteil, daß die durch das Bearbeiten entstehenden Partikel, beispielsweise beim Fräsen von keramischen Werkstoffen oder Verbundwerkstoffen, zuverlässig abgesaugt werden und insbesondere die Umweltbelastung minimiert und der Schutz des Anwenders maximiert wird. Der Querschnitt der Absaugungsöffnung ist dabei vorzugsweise mindestens so groß wie die Eingriffsfläche des Bearbeitungsgerätes. Vorzugsweise ist die Absaugungsöffnung unmittelbar am Bearbeitungswerkzeug vorgesehen, um eine hohe Absaugleistung zu erzielen, und die Absaugung selbst ist am Bearbeitungsgerät oder den Mitteln zum Aufnehmen festgelegt.

Die besondere Ausführungsart der Erfindung gemäß Anspruch 9 hat den Vorteil, daß durch den Einsatz eines Fräsers, vorzugsweise eines Konturfräsers wie etwa einem Halbrund-Fräser, insbesondere Hohlkehlen in Wischleisten besonders einfach und präzise hergestellt werden können.

Die besondere Ausführungsart der Erfindung gemäß Anspruch 10 hat den Vorteil, daß die erfindungsgemäße Vorrichtung durch eine kleine Bauweise und eine geringe Masse handbetätigbar ist, und somit die Gegenstände individuell und doch präzise bearbeitet werden können.
Die Handbetätigung bezieht sich dabei auf den Vorschub der Vorrichtung gegenüber dem zu bearbeitenden Gegenstand.

Weitere Vorteile, Merkmale und Einzelheiten der Erfindung ergeben sich aus den Unteransprüchen sowie der nachfolgenden Beschreibung, in der unter Bezugnahme auf die Zeichnungen ein Ausführungsbeispiel im einzelnen beschrieben ist.
- Fig. 1: zeigt eine Seitenansicht der erfindungsgemäßen Vorrichtung,
- Fig. 2: zeigt einen Querschnitt durch die erfindungsgemäße Vorrichtung entlang der Linie II-II der Fig. 1, und
- Fig. 3A bis 3C: zeigen die erfindungsgemäße Vorrichtung beim Bearbeiten eines Gegenstandes.

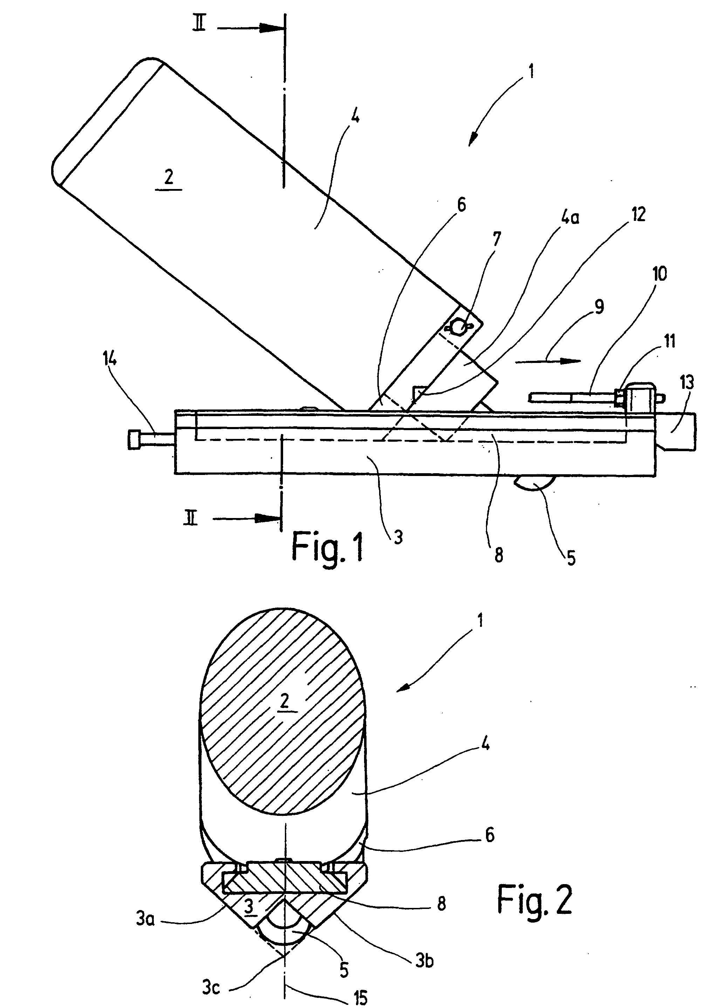

Fig. 1 zeigt eine Seitenansicht der erfindungsgemäßen Vorrichtung 1 zum Bearbeiten eines nicht dargestellten Gegenstandes mit einem motorbetriebenen Bearbeitungsgerät, im dargestellten Ausführungsbeispiel ein Fräsgerät 2, entlang einer in der Fig. 1 von links nach rechts in Richtung des Pfeils 9 verlaufenden Bearbeitungsbahn und parallel zu dieser Bearbeitungsbahn handbetätigt bewegbaren Mitteln 3 zum Anlegen der Vorrichtung 1 an den zu bearbeitenden Gegenstand, die im dargestellten Ausführungsbeispiel durch einen langgestreckten prismatischen Körper 3 gebildet sind. Das Fräsgerät 2 weist ein langgestrecktes Gehäuse 4 auf, in welchem ein Elektromotor als Antriebsquelle untergebracht ist. In Richtung auf den elektromotorisch angetriebenen Halbrund-Fräser 5 weist das Gehäuse 4 einen Schaft 4a zum Festlegen des Bearbeitungsgerätes 2 an den Mitteln 6 zum Aufnehmen auf. Die Festlegung erfolgt im Ausführungsbeispiel über eine an den Mitteln 6 zum Aufnehmen angebrachte Klemmschelle, die den Schaft 4a umgreift und mittels einer Klemmschraube 7 in Klemmwirkung mit dem Schaft 4a gebracht wird. Die Klemmschraube 7 kann dabei vorzugsweise als Flügelschraube bzw. als Flügelmutter ausgebildet sein, die mit einem Gewinde bzw. Gewindebolzen der Schelle der Mittel 6 zum Aufnehmen zusammenwirkt.

Die Mittel 6 zum Aufnehmen sind zusammen mit dem Bearbeitungsgerät 2 entlang der gestrichelt eingezeichneten Führung 8 in Richtung des Pfeils 9 zum Bearbeiten des Gegenstandes gegenüber den Mitteln 3 zum Anlegen bewegbar, insbesondere in der Art eines Schlittens geführt bewegbar. Die Bewegung wird in Richtung des Pfeils 9 durch einen Anschlagbolzen 10 begrenzt, der an den Mitteln 3 zum Anlegen festlegbar ist und dessen effektive Länge einstellbar und mittels der Mutter 11 sicherbar ist. Das Bearbeitungsgerät 2 läßt sich gegenüber den Mitteln 3 zum Anlegen in Richtung des Pfeils 9 so weit bewegen, bis der Bolzen 10 in Eingriff mit der an den Mitteln 6 zum Aufnehmen vorgesehenen Ausnehmung 12 kommt. In dieser Endposition ragt der Fräser 5 vorzugsweise genauso weit über die Mittel 3 zum Anlegen in Bewegungs- bzw. Bearbeitungsrichtung 9 hinaus, wie eine fest mit den Mitteln 3 zum Anlegen verbundene Nase 13. Zum Zwecke einer erleichterten Handbetätigung weist die Vorrichtung 1 außerdem noch einen Griff 14 am der Nase 13 gegenüberliegenden Ende der Mittel 3 zum Anlegen auf.

Die Fig. 2 zeigt einen Querschnitt durch die erfindungsgemäße Vorrichtung 1 entlang der Linie II-II der Fig. 1. Das Bearbeitungsgerät 2 ist von den Mitteln 6 aufgenommen und zusammen mit diesen durch eine Schwalbenschwanzführung 8 in den Mitteln 3 zum Anlegen der Vorrichtung 1 an dem nicht dargestellten zu bearbeitenden Gegenstand geführt. Die Mittel 3 zum Anlegen der Vorrichtung 1 an den zu bearbeitenden Gegenstand besitzen einen zur Achse 15 symmetrischen Querschnitt und weisen zwei Schenkel 3a, 3b auf, die jeweils an einer Fläche des zu bearbeitenden Gegenstandes anlegbar sind und deren gedachte Verlängerungen sich im Punkt 3c schneiden und einen Winkel von 90° einschließen. Die Schenkel 3a, 3b sind jedoch nicht bis zum Punkt 3c ausgeformt, sondern weisen einen Einschnitt auf, der Raum für die zu bearbeitende Oberfläche bzw. den Fräser 5 schafft. Die Außenkontur des Fräsers 5 tangiert dabei die gedachten Verlängerungen der Schenkel 3a und 3b wie dargestellt. Diese exakte Positionierung des Bearbeitungsgerätes 2 gegenüber den Mitteln 3 zum Anlegen des Bearbeitungsgerätes 2 wird durch eine entsprechende Positionierung des Bearbeitungsgerätes 2 in den Mitteln 6 zum Aufnehmen sowie durch die präzise ein- und nachstellbare Schwalbenschwanzführung 8 erreicht.

Bei der in Fig. 2 dargestellten Ausführungsform sind die Mittel 3 zum Anlegen mit den beiden Schenkeln 3a, 3b einstückig ausgeführt. Denkbar ist jedoch auch eine Ausführungsart, bei der die Schenkel 3a, 3b um jeweils eine senkrecht zur Zeichenebene der Fig. 2 angeordnete Schwenkachse verschwenkbar und insbesondere im Winkel zueinander ein- und feststellbar sind. Eine optional vorsehbare, nicht dargestellte Absaugung sollte unmittelbar im Bereich der Span- bzw. Stauberzeugung wirken und die Absaugöffnung sollte mindestens in der Größenordnung des Durchmessers des Fräsers 5 liegen.

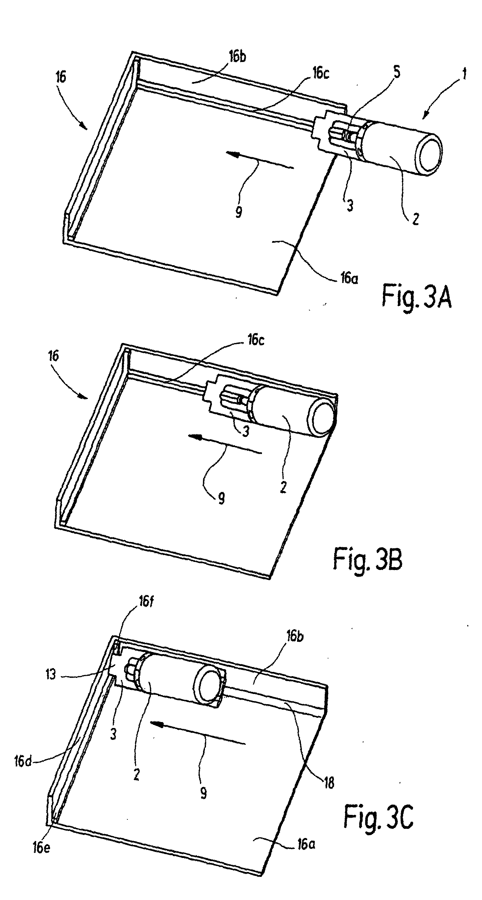

Die Figuren 3A bis 3C zeigen die erfindungsgemäße Vorrichtung 1 beim Bearbeiten eines Gegenstandes 16, insbesondere bei der Herstellung einer Hohlkehle 18. Zur Herstellung der Hohlkehle 18 wird die im Stoßbereich zweier senkrecht aufeinander stehenden, ersten und zweiten Flächen 16a, 16b des Gegenstandes 16 angebrachte erste Leiste 16c mittels des Fräsers 5 bearbeitet. Hierzu werden zunächst die Mittel 3 zum Anlegen der Vorrichtung 1 in Anlage mit dem zu bearbeitenden Gegenstand 16 gebracht, insbesondere wird der (in der Fig. 3A nicht sichtbare) Schenkel 3a in Anlage mit der Fläche 16a und der (in der Figur 3A ebenfalls nicht sichtbare) Schenkel 3b in Anlage mit der Fläche 16b gebracht. Das Bearbeitungsgerät 2 befindet sich dabei in einer in Bezug auf die durch den Pfeil 9 repräsentierte Bearbeitungsrichtung hinteren Position auf den Mitteln 3. Der Fräser 5 befindet sich in dieser Position noch nicht im Eingriff mit dem Gegenstand 16, insbesondere nicht im Eingriff mit der zu bearbeitenden Leiste 16c. Die Bearbeitungsbahn, entlang der die Vorrichtung 1 bewegt wird, wird durch die erste und zweite Fläche 16a und 16b bzw. durch die Leiste 16c bestimmt.

Im Übergang von der Fig. 3A zur Fig. 3B werden die Mittel 3 bei unveränderter Position des Bearbeitungsgerätes 2 in Richtung des Pfeils 9 bewegt und der Fräser 5 kommt in Eingriff mit dem zu bearbeitenden Gegenstand 16, insbesondere mit der Leiste 16c. Die Mittel 3 werden so lange in Richtung des Pfeils 9 bewegt, bis, wie in der Fig. 3C dargestellt, die einstückig mit den Mitteln 3 ausgebildete Nase 13 in Anlage mit der dritten Fläche 16d kommt. Anschließend wird das Bearbeitungsgerät 2 gegenüber den Mitteln 3 parallel zur Bearbeitungsbahn bzw. in Fortführung der bisherigen Bearbeitungsrichtung bewegt, bis der (in den Fig. 3A bis 3C nicht dargestellte) Anschlagbolzen 10 in Anlage mit der (in den Fig. 3A bis 3C ebenfalls nicht dargestellten) Ausnehmung 12 kommt, und damit die Hohlkehle 18 bis in den Eckpunkt vervollständigt, an dem die drei Flächen 16a, 16b und 16d aneinander stoßen.

In entsprechender Wiederholung des in den Figuren 3A bis 3C dargestellten Bearbeitungsvorganges lassen sich auch die zweiten und dritten Leisten 16e und 16f bearbeiten bzw. entsprechende Hohlkehlen anfertigen.

## Patentansprüche

1. Vorrichtung zum Bearbeiten eines Gegenstandes entlang einer Bearbeitungsbahn, insbesondere Hohlkehlfräsmaschine, mit beim Bearbeiten parallel zur Bearbeitungsbahn bewegbaren Mitteln (3) zum Anlegen der Vorrichtung (1) an den Gegenstand und mit einem antreibbaren Bearbeitungsgerät (2), **dadurch gekennzeichnet, daß** das Bearbeitungsgerät (2) gegenüber den Mitteln (3) zum Anlegen beim Bearbeiten ebenfalls parallel zur Bearbeitungsbahn beweglich ist.

2. Vorrichtung nach Anspruch 1, **dadurch gekennzeichnet, daß** die Vorrichtung Mittel (6) zum Aufnehmen des Bearbeitungsgerätes (2) aufweist, an denen das Bearbeitungsgerät (2) festlegbar ist, insbesondere durch einen Klemmverschluß.

3. Vorrichtung nach Anspruch 2, **dadurch gekennzeichnet, daß** die Mittel (6) zum Aufnehmen des Bearbeitungsgerätes (2) in den Mitteln (3) zum Anlegen geführt sind, insbesondere durch eine ein-bzw. nachstellbare Führung (8).

4. Vorrichtung nach einem der Ansprüche 1 bis 3, **dadurch gekennzeichnet, daß** die Vorrichtung einen Anschlag (11) für die Bewegung des Bearbeitungsgerätes (2) gegenüber den Mitteln (3) zum Anlegen aufweist.

5. Vorrichtung nach Anspruch 4, **dadurch gekennzeichnet, daß** der Anschlag (11) einstellbar ist.

6. Vorrichtung nach einem der Ansprüche 1 bis 5, **dadurch gekennzeichnet, daß** die Mittel (3) zum Anlegen der Vorrichtung (1) einen Winkel einschließende Schenkel (3a, 3b) zum Anlegen der Vorrichtung (1) an den Gegenstand aufweisen.

7. Vorrichtung nach Anspruch 6, **dadurch gekennzeichnet, daß** die Schenkel (3a, 3b) zueinander verschwenkbar sind und der Winkel zwischen den Schenkeln (3a, 3b) einstellbar ist.

8. Vorrichtung nach einem der Ansprüche 1 bis 7, **dadurch gekennzeichnet, daß** die Vorrichtung (1) eine Absaugung mit einer Absaugöffnung aufweist, die vorzugsweise in unmittelbarer Nähe eines Werkzeuges (5) des Bearbeitungsgerätes angeordnet ist.

9. Vorrichtung nach einem der Ansprüche 1 bis 8, **dadurch gekennzeichnet, daß** das antreibbare Bearbeitungsgerät (2) einen Konturfräser aufweist, insbesondere einen Halbrund-Fräser (5) zum Herstellen von Hohlkehlen in Wischleisten.

10. Vorrichtung nach einem der Ansprüche 1 bis 9, **dadurch gekennzeichnet, daß** die Vorrichtung (1) handbetätigbar ist, insbesondere eine handbetätigte Hohlkehlfräsmaschine.

## Claims

1. Device for the machining of an object along a machining track, in particular a channel milling machine, with means (3) for placing the device (1) on the object, movable during machining parallel to the machining track, and with a driveable machining unit (2), **characterized in that** the machining unit (2) is also movable parallel to the machining track, relative to the means (3) of placing.

2. Device according to claim 1, **characterized in that** the device has means (6) for holding the machining unit (2), to which the machining unit (2) may be fixed, in particular by means of a clamp lock.

3. Device according to claim 2, **characterized in that** the means (6) for holding the machining unit (2) are guided in the means (3) for placing, in particular by means of an adjustable and readjustable guide (8).

4. Device according to any of claims 1 to 3, **characterized in that** the device has a stop (11) for the movement of the machining unit (2) relative to the means (3) for placing.

5. Device according to claim 4, **characterized in that** the stop (11) is adjustable.

6. Device according to any of claims 1 to 5, **characterized in that** the means (3) for placing the device (1) have legs (3a, 3b) enclosing an angle for placing the device (1) on the object.

7. Device according to claim 6, **characterized in that** the legs (3a, 3b) may be swivelled towards one another and the angle between the legs (3a, 3b) is adjustable.

8. Device according to any of claims 1 to 7, **characterized in that** the device (1) has an extractor with an extractor orifice, which is preferably mounted in the immediate vicinity of a tool (5) of the machining unit.

9. Device according to any of claims 1 to 8, **characterized in that** the driveable machining unit (2) has a profile miller, in particular a semi-circular miller (5) for producing channels in wiping strips.

10. Device according to any of claims 1 to 9, **characterized in that** the device (1) may be manually operated and is in particular a hand-operated channel milling machine.

## Revendications

1. Dispositif pour usiner un objet le long d'une voie d'usinage, en particulier une machine à fraiser des congés, avec des moyens (3) mobiles parallèlement à la voie d'usinage pendant l'usinage pour appuyer le dispositif (1) contre l'objet et avec un appareil d'usinage (2) pouvant être entraîné, **caractérisé en ce que**, pendant l'usinage, l'appareil d'usinage (2), par rapport aux moyens (3), est également mobile parallèlement à la voie d'usinage d'appui.

2. Dispositif selon la revendication 1, **caractérisé en ce que** le dispositif présente des moyens (6) pour recevoir l'appareil d'usinage (2), contre lesquels d'appareil d'usinage (2) peut être immobilisé, en particulier par une fermeture à serrage.

3. Dispositif selon la revendication 2, **caractérisé en ce que** les moyens (6) pour recevoir l'appareil d'usinage (2) sont guidés dans les moyens (3) d'appui, en particulier par un guidage (8) réglable ou réajustable.

4. Dispositif selon l'une des revendications 1 à 3, **caractérisé en ce que** le dispositif présente une butée (11) pour le mouvement de l'appareil d'usinage (2) par rapport aux moyens (3) d'appui.

5. Dispositif selon la revendication 4, **caractérisé en ce que** la butée (11) est réglable.

6. Dispositif selon l'une des revendications 1 à 5, **caractérisé en ce que** les moyens (3) d'appui du dispositif (1) présentent des branches (3a, 3b) délimitant un angle pour appuyer le dispositif (1) contre l'objet.

7. Dispositif selon la revendication 6, **caractérisé en ce que** les branches (3a, 3b) peuvent pivoter l'une par rapport à l'autre et l'angle entre les branches (3a, 3b) est réglable.

8. Dispositif selon l'une des revendications 1 à 7, **caractérisé en ce que** le dispositif (11) présente une aspiration avec une ouverture d'aspiration, qui est placée de préférence à proximité immédiate d'un outil (5) de l'appareil d'usinage.

9. Dispositif selon l'une des revendications 1 à 8, **caractérisé en ce que** l'appareil d'usinage (2) pouvant être entraîné présente une fraise à contours, en particulier une fraise demi-ronde (5) pour réaliser des congés dans des barrettes d'essuyage.

10. Dispositif selon l'une des revendications 1 à 9, **caractérisé en ce que** le dispositif (1) peut être actionné à la main, et est en particulier une machine manuelle à fraiser les congés.
